# EUROPEAN PATENT SPECIFICATION

(11) **EP 1 804 596 B1**
(45) Date of publication and mention of the grant of the patent: **06.03.2013**
(21) Application number: 05808353.6
(22) Date of filing: 30.09.2005
(51) Int. Cl.: A23L 1/236, A23L 1/22, A23P 1/04

(54) **THERMALLY STABLE, HIGH TENSILE STRENGTH ENCAPSULATION COMPOSITIONS FOR ACTIVES**
HITZESTABILE WIRKSTOFFVERKAPSELUNGSZUSAMMENSETZUNGEN MIT HOHER ZUGFESTIGKEIT
COMPOSITIONS D'ENCAPSULATION D'ACTIFS, PRESENTANT UNE RESISTANCE ELEVEE A LA TRACTION, THERMIQUEMENT STABLES

(30) Priority: 30.09.2004 US 955149
(43) Date of publication of application: 11.07.2007
(73) Proprietor: Kraft Foods Global Brands LLC, Northfield, IL 60093 (US)
(72) Inventor: BOGHANI, Navroz, Flanders, NJ 07836 (US); GEBRESELASSIE, Petros, Piscataway, NJ 08854 (US)
(74) Representative: Wilson Gunn
(86) International application number: PCT/US2005/035484
(87) International publication number: WO 2006/039650

(56) References cited:
- EP-A- 0 255 260
- EP-A- 0 434 321
- EP-A- 0 453 397
- WO-A-98/03076
- WO-A1-2005/103304
- US-A- 4 927 646
- US-A- 4 929 447
- US-A1- 2002 044 968

## Description

### FIELD

Included are encapsulated compositions including a polymer and sucralose. The compositions include an encapsulant including a polymer in combination with sucralose. Methods of preparing the encapsulated compositions are also provided.

### BACKGROUND

Encapsulated intense sweeteners have a particular advantage when included in gum compositions such as chewing gum and bubble gum compositions. The encapsulated sweeteners are not immediately released as sugar would be when included in a chewing gum. By contrast, an encapsulated sweetener composition provides extended sweetening on chewing because the sweetener is not released until the encapsulating material has been subjected to mastication.

Intense sweeteners such as aspartame (APM) and acesulfame potassium (Ace-K.) have been used in encapsulated compositions in combination with high molecular weight polymers which allow for their slow release upon chewing in a gum composition. EP 0453 397 discloses a flavor delivery system which may include acesulfame-K, while EP 0434 321 discloses a sweetener delivery system which may include acesulfame-K and aspartame. Moreover, WO 98/03076 discloses encapsulated compositions including aspartame,

Sucralose is another popular intense sweetener which is derived from sucrose in which one or more hydroxy groups are replaced by chlorine atoms. This compound is described in U.K. Patent No. 1,543,167. Sucralose may be referred to by different chemical names including: 4-chloro-4-deoxy-α-D-galactopyranosyl, 1,6-dichloro-1,6-dideoxy-β-D-fructofuranoside, and known as 4,1',6',-trichloro-4,1',6'-trideoxygalactosucrose.

Sucralose is relatively stable and inert. This includes exhibiting stability in acid aqueous solutions, in marked contrast to peptide-based sweeteners such as aspartame. Under completely dry conditions, however, sucralose which is present in a crystalline form tends to discolor in response to elevated temperatures. For example, such discoloration can be exhibited after twenty minutes of exposure of pure dry sucralose to a temperature of 100°C., wherein the color changes to a pale brown. This degradation of sucralose results in a commercially unacceptable product. This high temperature instability of sucralose has made it commercially impractical to prepare an encapsulated sucralose with the extrusion techniques used to prepare the encapsulated APM and Ace-K compositions using high tensile strength / softening point polymers.

Since sucralose is a desirable sweetener, and is preferred for compositions where APM stability is questionable, there is a need for an encapsulated sucralose composition which may be used in a variety of compositions including gum compositions. Ideally, the encapsulated composition would include an active such as another sweetener, medicament, vitamin or flavor.

### SUMMARY

In some embodiments, there is a composition which includes an active and at least one coating layer. The coating layer includes polyvinyl acetate and sucralose and at least partially encapsulates the active.

Some embodiments also provide a composition including a sucralose region and at least one coating layer contiguous with the sucralose region. The coating layer includes a polymer and sucralose; wherein the coating layer completely surrounds the sucralose region, wherein said polymer is selected from the group consisting of: acrylic copolymers and copolymers, carboxyvinyl polymer, polyamides, polyvinyl acetate, polyvinyl acetate phthalate, polyvinylpyrrolidone, and combinations thereof.

Other embodiments provide a method of preparing a composition which includes:
(a) suspending active particles in a fluidizing air stream;
(b) preparing a coating composition including a polymer, sucralose, and a solvent; and
(c) spraying the coating composition onto the suspended active particles to provide an encapsulated composition wherein said polymer is selected from the group consisting of: acrylic copolymers and copolymers, carboxyvinyl polymer, polyamides, polyvinyl acetate, polyvinyl acetate phthalate, polyvinylpyrrolidone, and combinations thereof.

### DETAILED DESCRIPTION

As used herein the transitional term "comprising," (also "comprises," etc.) which is synonymous with "including," "containing," or "characterized by," is inclusive or open-ended and does not exclude additional, unrecited elements or method steps, regardless of its use in the preamble or the body of a claim.

As used herein, the terms "bubble gum" and "chewing gum" are used interchangeably and are both meant to include any gum compositions.

As used herein, the term "active" refers to any composition which may be included in the encapsulated compositions of some embodiments, wherein the active provides some desirable property upon release from encapsulation. Examples of suitable actives include sweeteners, such as sucralose, flavors, medicaments, vitamins, and combinations thereof.

For the encapsulated compositions of some embodiments, the coating composition includes a high-tensile strength polymer in addition to sucralose. The active may be encapsulated by the coating composition either wholly or partly. The active may alternatively be part of a matrix formed by the polymer in combination with sucralose. In the encapsulated composition, the active may be present in any desired amount, such as from about 5% to about 50% by weight of the encapsulated composition.

Any of a variety of active ingredients may be included in the present embodiments. These include sweeteners, flavors, breath-freshening agents, medicaments such as analgesics, anti-histamines, decongestants, antacids, and vitamins.

Suitable sweeteners may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Without being limited to particular sweeteners, representative categories and examples include:
(a) water-soluble sweetening agents such as dihydrochalcones, monellin, steviosides, glycyrrhizin, dihydroflavenol, and sugar alcohols such as sorbitol, mannitol, maltitol, and L-aminodicarboxylic acid aminoalkenoic acid ester amides, such as those disclosed in U.S. Pat. No. 4,619,834, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame) and materials described in U.S. Pat. No. 3,492,131, L-alphaaspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(I-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; and 4,6,1',6'-tetradeoxy-sucrose, and mixtures thereof; and
(e) protein based sweeteners such as thaumaoccous danielli (Thaumatin I and II).

The intense sweetening agents may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

In some embodiments wherein the active is a sweetener, it may be a high intensity sweetener such as sucralose, saccharin salts, acesulfame potassium, aspartame, thaumatin, neotame, alitame, and combinations thereof. More specifically, sucralose may be used alone or in combination with another sweetener either as the active or in the coating layer.

The flavoring agents which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruit, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath-freshening properties, particularly the mint flavors.

Other useful flavorings include aldehydes and esters such as cinnamyl acetate, cinnamaldehyde, citral diethylacetal, dihydrocarvyl acetate, eugenyl formate, p-methylamisol, and so forth. Generally any flavoring or food additive such as those described in Chemicals Used in Food Processing, publication 1274, pages 63-258, by the National Academy of Sciences, may be used. This may include natural as well as synthetic flavors.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, and mixtures thereof.

In some embodiments, a flavoring agent may be employed in either liquid form and/or dried form. When employed in the latter form, suitable drying means such as spray drying the oil may be used. Alternatively, the flavoring agent may be absorbed onto water soluble materials, such as cellulose, starch, sugar, maltodextrin, gum arabic and so forth or may be encapsulated. The actual techniques for preparing such dried forms are well-known.

In some embodiments, a flavoring agent may be employed in either liquid form and/or dried form. When employed in the latter form, suitable drying means such as spray drying the oil may be used. Alternatively, the flavoring agent may be absorbed onto water-soluble materials, such as cellulose, starch, sugar, maltodextrin, gum arabic and so forth or may be encapsulated. The actual techniques for preparing such dried forms are well-known.

The amount of flavoring agent employed herein may be a matter of preference subject to such factors as the type of final chewing gum composition, the individual flavor, the gum base employed, and the strength of flavor desired. Thus, the amount of flavoring may be varied in order to obtain the result desired in the final product and such variations are within the capabilities of those skilled in the art without the need for undue experimentation. In gum compositions, the flavoring agent is generally present in amounts from about 0.02% to about 5%, and more specifically from about 0.1% to about 2%, and even more specifically, from about 0.8% to about 1.8%, by weight of the chewing gum composition.

A variety of drugs, including medications, herbs, and nutritional supplements may also be included as the active to be encapsulated. Examples of useful drugs include ace-inhibitors, antianginal drugs, anti-arrhythmias, anti-asthmatics, anti-cholesterolemics, analgesics, anesthetics, anti-convulsants, anti-depressants, anti-diabetic agents, anti-diarrhea preparations, antidotes, anti-histamines, anti-hypertensive drugs, anti-inflammatory agents, anti-lipid agents, anti-manics, anti-nauseants, anti-stroke agents, anti-thyroid preparations, anti-tumor drugs, anti-viral agents, acne drugs, alkaloids, amino acid preparations, anti-tussives, anti-uricemic drugs, anti-viral drugs, anabolic preparations, systemic and non-systemic anti-infective agents, anti-neoplastics, anti-parkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, endometriosis management agents, enzymes, erectile dysfunction therapies such as sildenafil citrate, which is currently marketed as Viagra®, fertility agents, gastrointestinal agents, homeopathic remedies, hormones, hypercalcemia and hypocalcemia management agents, immunomodulators, immunosuppressives, migraine preparations, motion sickness treatments, muscle relaxants, obesity management agents, osteoporosis preparations, oxytocics, parasympatholytics, parasympathomimetics, prostaglandins, psychotherapeutic agents, respiratory agents, sedatives, smoking cessation aids such as bromocryptine or nicotine, sympatholytics, tremor preparations, urinary tract agents, vasodilators, laxatives, antacids, ion exchange resins, anti-pyretics, appetite suppressants, expectorants, anti-anxiety agents, antiulcer agents, anti-inflammatory substances, coronary dilators, cerebral dilators, peripheral vasodilators, psycho-tropics, stimulants, anti-hypertensive drugs, vasoconstrictors, migraine treatments, antibiotics, tranquilizers, anti-psychotics, anti-tumor drugs, anti-coagulants, antithrombotic drugs, hypnotics, anti-emetics, anti-nauseants, anti-convulsants, neuromuscular drugs, hyper- and hypo-glycemic agents, thyroid and anti-thyroid preparations, diuretics, antispasmodics, terine relaxants, anti-obesity drugs, erythropoietic drugs, anti-asthmatics, cough suppressants, mucolytics, DNA and genetic modifying drugs, and combinations thereof.

The coating layer which surrounds the active, may also include a solvent. In addition to the sucralose and polymer, the solvent should be capable of dissolving the polymer. The solvent may be any solvent known for this purpose. For example, if the polymer is polyvinyl acetate, suitable solvents include ethyl acetate, diethyl ether, acetone, benzene, ethylene dichloride, methanol, methyl ethyl ketone, ethanol, toluene, xylene, amyl acetate, and combinations thereof.

One or more coating layers may be present. In some embodiments wherein more than one coating layer is present, the first coating layer may include sucralose and a high tensile strength polymer, with the optional addition of another sweetener. A second coating may completely or partially encapsulate the active particles and may include either a single polymer, a combination of different polymers, or a combination of one or more polymers and a sweetener such as sucralose.

Polymers which may be used in the coating layers include acrylic polymers and copolymers, carboxyvinyl polymer, polyamides, polystyrene, polyvinyl acetate, polyvinyl acetate phthalate, polyvinylpyrrolidone, and combinations thereof. One or more different polymers may be used in each of the coating layers. For example, polyvinyl acetate may be included in a first coating with a combination of polyvinyl acetate and another polymer in a subsequent exterior coating.

The encapsulated particles of some embodiments may be prepared by any suitable spray coating method as known in the art. One suitable process is the Wurster process. This process provides a method for encapsulating individual particulate materials. First the particles to be encapsulated are suspended in a fluidizing air stream which provides a generally cyclic flow in front of a spray nozzle. The spray nozzle sprays an atomized flow of the coating solution, which will include sucralose, a polymer and a suitable solvent.

The atomized coating solution collides with the particles as they are carried away from the nozzle to provide a particle coating with the coating solution. The temperature of the fluidizing air stream, which also serves to suspend the particles to be coated, may be adjusted to evaporate the solvent shortly after the coating solution contacts the particles. This serves to solidify the coating on the particles, resulting in the desired encapsulated particle.

This process may be repeated until the desired thickness of the coating is achieved. Alternatively, the process may be repeated with a different coating solution to provide different and distinct coating layers in the encapsulated particle composition.

Following the coating process, the particles may then be formed to an appropriate size as desired, generally from an average particle size range of about 50 µm to about 800 µm. This may be accomplished by any suitable means such as chopping, pulverizing, milling or grinding the particles.

The gum compositions of some embodiments may include a gum base as well as the encapsulated active composition. The gum base may include any component known in the chewing gum art. For example, the gum base may include elastomers, bulking agents, waxes, elastomer solvents, emulsifiers, plasticizers, fillers and mixtures thereof.

The elastomers (rubbers) employed in the gum base will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and combinations thereof. Examples of synthetic elastomers include, without limitation, styrene-butadiene copolymers (SBR), polyisobutylene, isobutylene-isoprene copolymers, polyethylene, polyvinyl acetate and the like, and combinations thereof.

Additional useful polymers include: crosslinked polyvinyl pyrrolidone, polymethylmethacrylate; copolymers of lactic acid, polyhydroxyalkanoates, plasticized ethylcellulose, polyvinyl acetatephthalate and combinations thereof.

The amount of elastomer employed in the gum base may vary depending upon various factors such as the type of gum base used, the consistency of the gum composition desired and the other components used in the composition to make the final chewing gum product. In general, the elastomer will be present in the gum base in an amount from about 10% to about 60% by weight of the gum region, desirably from about 35% to about 40% by weight.

In some embodiments, the gum base may include wax. It softens the polymeric elastomer mixture and improves the elasticity of the gum base. When present, the waxes employed will have a melting point below about 60°C., and preferably between about 45°C. and about 55°C. The low melting wax may be a paraffin wax. The wax may be present in the gum base in an amount from about 6% to about 10%, and preferably from about 7% to about 9.5%, by weight of the gum base.

In addition to the low melting point waxes, waxes having a higher melting point may be used in the gum base in amounts up to about 5%, by weight of the gum base. Such high melting waxes include beeswax, vegetable wax, candelilla wax, carnuba wax, most petroleum waxes, and the like, and mixtures thereof.

In addition to the components set out above, the gum base may include a variety of other ingredients, such as components selected from elastomer solvents, emulsifiers, plasticizers, fillers, and mixtures thereof.

The gum base may contain elastomer solvents to aid in softening the elastomer component. Such elastomer solvents may include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts from about 2% to about 15%, and preferably from about 7% to about 11%, by weight of the gum base.

The gum base may also include emulsifiers which aid in dispersing the immiscible components into a single stable system. The emulsifiers useful in this invention include glyceryl monostearate, lecithin, fatty acid monoglycerides, diglycerides, propylene glycol monostearate, and the like, and mixtures thereof. The emulsifier may be employed in amounts from about 2% to about 15%, and more specifically, from about 7% to about 11%, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to about 20% by weight of the gum base, and more specifically in amounts from about 9% to about 17%, by weight of the gum base.

Plasticizers also include the hydrogenated vegetable oils and include soybean oil and cottonseed oil which may be employed alone or in combination. These plasticizers provide the gum base with good texture and soft chew characteristics. These plasticizers and softeners are generally employed in amounts from about 5% to about 14%, and more specifically in amounts from about 5% to about 13.5%, by weight of the gum base.

Anhydrous glycerin may also be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

In some embodiments, the gum base of this invention may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, tricalcium phosphate, dicalcium phosphate, calcium sulfate and the like, and mixtures thereof. These fillers or adjuvants may be used in the gum base compositions in various amounts. The amount of filler may be present in an amount from about zero to about 40%, and more specifically from about zero to about 30%, by weight of the gum base.

A variety of traditional ingredients may be optionally included in the gum compositions in effective amounts such as coloring agents, antioxidants, preservatives, flavoring agents, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, and mixtures thereof, may also be included. Other conventional chewing gum additives known to one having ordinary skill in the chewing gum art may also be used in the gum base.

The gum composition may include amounts of conventional additives selected from the group consisting of sweetening agents (sweeteners), plasticizers, softeners, emulsifiers, waxes, fillers, bulking agents (carriers, extenders, bulk sweeteners), mineral adjuvants, flavoring agents (flavors, flavorings), coloring agents (colorants, colorings), antioxidants, acidulants, thickeners, medicaments, and the like, and mixtures thereof. Some of these additives may serve more than one purpose. For example, in sugarless gum compositions, a sweetener, such as maltitol or other sugar alcohol, may also function as a bulking agent.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickeners, used alone or in combination with other softeners, such as methyl cellulose, alginates, carrageenan, xanthan gum, gelatin, carob, tragacanth, locust bean gum, pectin, alginates, galactomannans such as guar gum, carob bean gum, glucomannan, gelatin, starch, starch derivatives, dextrins and cellulose derivatives such as carboxy methyl cellulose, acidulants such as malic acid, adipic acid, citric acid, tartaric acid, fumaric acid, and mixtures thereof, and fillers, such as those discussed above under the category of mineral adjuvants.

In some embodiments, the gum region may also contain a bulking agent. Suitable bulking agents may be water-soluble and include sweetening agents selected from, but not limited to, monosaccharides, disaccharides, polysaccharides, sugar alcohols, and mixtures thereof; randomly bonded glucose polymers such as those polymers distributed under the trade name POLYDEXTROSE by Pfizer, Inc., Groton, Conn.; isomalt (a racemic mixture of alpha-D-glucopyranosyl-1,6-mannitol and alpha-D-glucopyranosyl-1,6-sorbitol manufactured under the trade name PALATINIT by Suddeutsche Zucker), maltodextrins; hydrogenated starch hydrolysates; hydrogenated hexoses; hydrogenated disaccharides; minerals, such as calcium carbonate, talc, titanium dioxide, dicalcium phosphate; celluloses; and mixtures thereof.

Suitable sugar bulking agents include monosaccharides, disaccharides and polysaccharides such as xylose, ribulose, glucose (dextrose), mannose, galactose, fructose (levulose), sucrose (sugar), maltose, invert sugar, partially hydrolyzed starch and corn syrup solids, and mixtures thereof.

Suitable sugar alcohol bulking agents include sorbitol, xylitol, mannitol, galactitol, maltitol, and mixtures thereof.

Suitable hydrogenated starch hydrolysates include those disclosed in U.S. Pat. Nos. 25,959, 3,356,811, 4,279,931 and various hydrogenated glucose syrups and/or powders which contain sorbitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN, a commercially available product manufactured by Roquette Freres of France, and HYSTAR, a commercially available product manufactured by Lonza, Inc., of Fairlawn, N.J., are also useful.

Any sweetening agent or flavoring agent, as described above, may also be added as an optional component to the gum compositions.

Coloring agents may be used in amounts effective to produce the desired color. The coloring agents may include pigments which may be incorporated in amounts up to about 6%, by weight of the gum composition. For example, titanium dioxide may be incorporated in amounts up to about 2%, and preferably less than about 1%, by weight of the gum composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl-N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884.

Suitable oils and fats usable in gum compositions include partially hydrogenated vegetable or animal fats, such as coconut oil, palm kernel oil, beef tallow, and lard, among others. These ingredients when used are generally present in amounts up to about 7%, and preferably up to about 3.5%, by weight of the gum composition.

Some embodiments may include a method for preparing the improved chewing gum compositions for the gum region, including both chewing gum and bubble gum compositions. The chewing gum compositions may be prepared using standard techniques and equipment known to those skilled in the art. The apparatus useful in accordance with some embodiments comprises mixing and heating apparatus well known in the chewing gum manufacturing arts, and therefore the selection of the specific apparatus will be apparent to the artisan.

## Claims

1. A composition comprising an active and at least one coating layer, at least partially encapsulating said active; said coating layer comprising polyvinyl acetate and sucralose.

2. The composition of claim 1, wherein said coating layer further comprises a solvent.

3. The composition of claim 1, further comprising additional coating layers.

4. The composition of claim 1, wherein said coating layer further comprises an additional sweetener other than sucralose.

5. The composition of claim 1, wherein said active comprises a member selected from the group consisting of high intensity sweeteners, flavors, medicaments, vitamins, and combinations thereof.

6. The composition of claim 1, wherein said composition further comprises an additional coating layer, wherein (1) said additional coating layer comprises a polymer and (2) said additional coating layer completely surrounds said encapsulated composition.

7. The composition of claim 6, wherein said polymer of the additional coating layer is selected from the group consisting of acrylic polymers and copolymers, carboxyvinyl polymer, polyamides, polystyrene, polyvinyl acetate, polyvinyl acetate phthalate, polyvinylpyrolidone, and combinations thereof.

8. The composition of claim 4, wherein said additional sweetener includes a high intensity sweetener.

9. The composition of claim 8, wherein said additional sweetener is a member selected from the group consisting of saccharin salts, acesulfame potassium, aspartame, thaumatin, neotame, alitame, and combinations thereof.

10. The composition of claim 2, wherein said solvent is selected from the group consisting of ethyl acetate, diethyl ether, acetone, benzene, ethylene dichloride, methanol, methyl ethyl ketone, ethanol, toluene, xylene, amyl acetate, and combinations thereof.

11. The composition of claim 1, wherein said encapsulated composition comprises particles having an average particle size range of about 50 µm to about 800 µm.

12. A composition comprising a sucralose region and at least one coating layer contiguous with said sucralose region; said coating layer comprising a polymer and sucralose; wherein said coating layer completely surrounds said sucralose region, and wherein said polymer is selected from the group consisting of acrylic polymers and copolymers, carboxyvinyl polymer, polyamides, polystyrene, polyvinyl acetate, polyvinyl acetate phthalate, polyvinylpyrrolidone, and combinations thereof.

13. The composition of claim 12 wherein the polymer comprises polyvinyl acetate.

14. The composition of claim 12, wherein said coating layer further comprises a solvent.

15. A method of preparing an encapsulated composition comprising:
(a) suspending active particles in a fluidizing air stream;
(b) preparing a coating composition comprising a polymer, sucralose, and a solvent; and
(c) spraying said coating composition onto said suspended active particles to provide an encapsulated composition; wherein the polymers is selected from the group consiting of acrilic polymers and copolymers, carboxyvinyl polymer, polyamides,polystyrene, polvinyl acetate, polyvinyl acetate phthalate, polyvinylpyrrolidone, and combinations thereof.

16. The method of claim 15, wherein a polymer is polyvinyl acetate.

17. The method of claim 15, wherein said active is selected from the group consisting of high intensity sweeteners, flavors, medicaments, vitamins and combinations thereof.

18. The method of claim 15, further comprising:
(d) evaporating said solvent from said encapsulated composition.

19. The method of claim 18, further comprising:
(e) suspending said encapsulated composition in a fluidizing air stream;
(f) preparing a second coating composition comprising a polymer and a solvent; and
(g) spraying said second coating composition onto said encapsulated composition.

20. The method of claim 15, wherein said coating composition further comprises an additional sweetener other than sucralose.

21. The method of claim 19, wherein said polymer in step (f) is selected from the group consisting of acrylic polymers and copolymers, carboxyvinyl polymer, polyamides, polystyrene, polyvinyl acetate, polyvinyl acetate phthalate, polyvinylpyrrolidone, and combinations thereof,

22. The method of claim 20, wherein said additional sweetener includes a high intensity sweetener.

23. The method of claim 22, wherein said high intensity sweetener is a member selected from the group consisting of saccharin salts, acesulfame potassium, aspartame, thaumatin, neotame, alitame, and combinations thereof.

24. The method of claim 15, wherein said solvent is selected from the group consisting of ethyl acetate, diethyl ether, acetone, benzene, ethylene dichloride, methanol, methyl ethyl ketone, ethanol, toluene, xylene, amyl acetate, and combinations thereof.

25. The method of claim 16, wherein said encapsulated sucralose composition comprises particles having an average particle size range of about 50 µm to about 800 µm.

## Patentansprüche

1. Zusammensetzung umfassend einen Wirkstoff und mindestens eine Beschichtungsschicht, durch die der Wirkstoff mindestens teilweise eingekapselt ist, wobei die Beschichtungsschicht Polyvinylacetat und Sucralose aufweist.

2. Zusammensetzung nach Anspruch 1, wobei die Beschichtungsschicht darüber hinaus ein Lösungsmittel aufweist.

3. Zusammensetzung nach Anspruch 1, die darüber hinaus zusätzliche Beschichtungsschichten aufweist.

4. Zusammensetzung nach Anspruch 1, wobei die Beschichtungsschicht darüber hinaus ein zusätzliches Süßungsmittel aufweist, bei dem es sich nicht um Sucralose handelt.

5. Zusammensetzung nach Anspruch 1, wobei der Wirkstoff eine Substanz aufweist, die aus der Gruppe ausgewählt ist, die aus hochintensiven Süßstoffen, Aromen, Medikamenten, Vitaminen und Kombinationen derselben besteht.

6. Zusammensetzung nach Anspruch 1, wobei die Zusammensetzung darüber hinaus eine zusätzliche Beschichtungsschicht aufweist, wobei (1) die zusätzliche Beschichtungsschicht ein Polymer aufweist und (2) die zusätzliche Beschichtungsschicht die eingekapselte Zusammensetzung vollständig umgibt.

7. Zusammensetzung nach Anspruch 6, wobei das Polymer der zusätzlichen Beschichtungsschicht aus der Gruppe ausgewählt ist, die aus Acrylpolymeren und -copolymeren, Carboxyvinylpolymer, Polyamiden, Polystyrol, Polyvinylacetat, Polyvinylacetatphthalat, Polyvinylpyrrolidon und Kombinationen derselben besteht.

8. Zusammensetzung nach Anspruch 4, wobei das zusätzliche Süßungsmittel einen hochintensiven Süßstoff beinhaltet.

9. Zusammensetzung nach Anspruch 8, wobei es sich bei dem zusätzlichen Süßungsmittel um eine Substanz handelt, die aus der Gruppe ausgewählt ist, die aus Saccharinsalzen, Acesulfam-Kalium, Aspartam, Thaumatin, Neotam, Alitam und Kombinationen derselben besteht.

10. Zusammensetzung nach Anspruch 2, wobei das Lösungsmittel aus der Gruppe ausgewählt ist, die aus Ethylacetat, Diethylether, Aceton, Benzol, Ethylendichlorid, Methanol, Methylethylketon, Ethanol, Toluol, Xylol, Amylacetat und Kombinationen derselben besteht.

11. Zusammensetzung nach Anspruch 1, wobei die eingekapselte Zusammensetzung Teilchen mit einer durchschnittlichen Teilchengröße im Bereich von ungefähr 50 µm bis ungefähr 800 µm aufweist.

12. Zusammensetzung aufweisend einen Sucralosebereich und mindestens eine Beschichtungsschicht, die an die Sucraloseregion unmittelbar angrenzt, wobei die Beschichtungsschicht ein Polymer und Sucralose aufweist, wobei die Beschichtungsschicht die Sucraloseregion vollständig umgibt, und wobei das Polymer aus der Gruppe ausgewählt ist, die aus Acrylpolymeren und - copolymeren, Carboxyvinylpolymer, Polyamiden, Polystyrol, Polyvinylacetat, Polyvinylacetatphthalat, Polyvinylpyrrolidon und Kombinationen derselben besteht.

13. Zusammensetzung nach Anspruch 12, wobei das Polymer Polyvinylacetat aufweist.

14. Zusammensetzung nach Anspruch 12, wobei die Beschichtungsschicht darüber hinaus ein Lösungsmittel aufweist.

15. Verfahren zur Zubereitung einer eingekapselten Zusammensetzung, umfassend:
(a) Suspendieren von Wirkstoffteilchen in einem verflüssigenden Luftstrom,
(b) Zubereiten einer Beschichtungszusammensetzung, die ein Polymer, Sucralose und ein Lösungsmittel aufweist, und
(c) Aufsprühen der Beschichtungszusammensetzung auf die suspendierten Wirkstoffteilchen, um eine eingekapselte Zusammensetzung bereitzustellen,
wobei das Polymer aus der Gruppe ausgewählt ist, die aus Acrylpolymeren und -copolymeren, Carboxyvinylpolymer, Polyamiden, Polystyrol, Polyvinylacetat, Polyvinylacetatphthalat, Polyvinylpyrrolidon und Kombinationen derselben besteht.

16. Verfahren nach Anspruch 15, wobei es sich bei einem Polymer um Polyvinylacetat handelt.

17. Verfahren nach Anspruch 15, wobei der Wirkstoff aus der Gruppe ausgewählt ist, die aus hochintensiven Süßstoffen, Aromen, Medikamenten, Vitaminen und Kombinationen derselben besteht.

18. Verfahren nach Anspruch 15, darüber hinaus umfassend:
(d) Verdampfen des Lösungsmittels aus der eingekapselten Zusammensetzung.

19. Verfahren nach Anspruch 18, darüber hinaus umfassend:
(e) Suspendieren der eingekapselten Zusammensetzung in einem verflüssigenden Luftstrom,
(f) Zubereiten einer zweiten Beschichtungszusammensetzung, die ein Polymer und ein Lösungsmittel aufweist, und
(g) Aufsprühen der zweiten Beschichtungszusammensetzung auf die eingekapselte Zusammensetzung.

20. Verfahren nach Anspruch 15, wobei die Beschichtungszusammensetzung darüber hinaus einen zusätzlichen Süßstoff aufweist, bei dem es sich nicht um Sucralose handelt.

21. Verfahren nach Anspruch 19, wobei das Polymer in Schritt (f) aus der Gruppe ausgewählt ist, die aus Acrylpolymeren und -copolymeren, Carboxyvinylpolymer, Polyamiden, Polystyrol, Polyvinylacetat, Polyvinylacetatphthalat, Polyvinylpyrrolidon und Kombinationen derselben besteht.

22. Verfahren nach Anspruch 20, wobei das zusätzliche Süßungsmittel einen hochintensiven Süßstoff beinhaltet.

23. Verfahren nach Anspruch 22, wobei es sich bei dem hochintensiven Süßstoff um eine Substanz handelt, die aus der Gruppe ausgewählt ist, die aus Saccharinsalzen, Acesulfam-Kalium, Aspartam, Thaumatin, Neotam, Alitam und Kombinationen derselben besteht.

24. Verfahren nach Anspruch 15, wobei das Lösungsmittel aus der Gruppe ausgewählt ist, die aus Ethylacetat, Diethylether, Aceton, Benzol, Ethylendichlorid, Methanol, Methylethylketon, Ethanol, Toluol, Xylol, Amylacetat und Kombinationen derselben besteht.

25. Verfahren nach Anspruch 16, wobei die eingekapselte Sucralose-Zusammensetzung Teilchen mit einer durchschnittlichen Teilchengröße im Bereich von ungefähr 50 µm bis ungefähr 800 µm aufweist.

## Revendications

1. Composition comprenant un actif et au moins une couche de revêtement, encapsulant au moins partiellement ledit actif; ladite couche de revêtement comprenant de l'acétate de polyvinyle et du sucralose.

2. Composition selon la revendication 1, dans laquelle ladite couche de revêtement comprend en outre un solvant.

3. Composition selon la revendication 1, comprenant en outre des couches de revêtement supplémentaires.

4. Composition selon la revendication 1, dans laquelle ladite couche de revêtement comprend en outre un édulcorant supplémentaire autre que le sucralose.

5. Composition selon la revendication 1, dans laquelle ledit actif comprend un élément choisi dans le groupe constitué d'édulcorants de haute intensité, d'aromatisants, de médicaments, de vitamines et de leurs combinaisons.

6. Composition selon la revendication 1, dans laquelle ladite composition comprend en outre une couche de revêtement supplémentaire, dans laquelle (1) ladite couche de revêtement supplémentaire comprend un polymère et (2) ladite couche de revêtement supplémentaire entoure complètement ladite composition encapsulée.

7. Composition selon la revendication 6, dans laquelle ledit polymère de la couche de revêtement supplémentaire est choisi dans le groupe constitué de polymères et copolymères acryliques, d'un polymère carboxyvinylique, de polyamides, de polystyrène, d'acétate de polyvinyle, d'acétate-phtalate de polyvinyle, de polyvinylpyrrolidone et de leurs combinaisons.

8. Composition selon la revendication 4, dans laquelle ledit édulcorant supplémentaire comprend un édulcorant de haute intensité.

9. Composition selon la revendication 8, dans laquelle ledit édulcorant supplémentaire est un élément choisi dans le groupe constitué de sels de saccharine, d'acésulfame potassium, d'aspartame, de thaumatine, de néotame, d'alitame et de leurs combinaisons.

10. Composition selon la revendication 2, dans laquelle ledit solvant est choisi dans le groupe constitué d'acétate d'éthyle, d'éther diéthylique, d'acétone, de benzène, de dichlorure d'éthylène, de méthanol, de méthyléthylcétone, d'éthanol, de toluène, de xylène, d'acétate d'amyle et de leurs combinaisons.

11. Composition selon la revendication 1, dans laquelle ladite composition encapsulée comprend des particules ayant une plage de granulométrie moyenne d'environ 50 µm à environ 800 µm.

12. Composition comprenant une région de sucralose et au moins une couche de revêtement contiguë à ladite région de sucralose, ladite couche de revêtement comprenant un polymère et du sucralose, dans laquelle ladite couche de revêtement entoure complètement ladite région de sucralose, et dans laquelle ledit polymère est choisi dans le groupe constitué de polymères et copolymères acryliques, d'un polymère carboxyvinylique, de polyamides, de polystyrène, d'acétate de polyvinyle, d'acétate-phtalate de polyvinyle, de polyvinylpyrrolidone et de leurs combinaisons.

13. Composition selon la revendication 12, dans laquelle le polymère comprend de l'acétate de polyvinyle.

14. Composition selon la revendication 12, dans laquelle ladite couche de revêtement comprend en outre un solvant.

15. Procédé de préparation d'une composition encapsulée comprenant :
(a) la mise en suspension des particules actives dans un courant d'air fluidisant ;
(b) la préparation d'une composition de revêtement comprenant un polymère, du sucralose et un solvant ; et
(c) la pulvérisation de ladite composition de revêtement sur lesdites particules actives en suspension pour obtenir une composition encapsulée, dans laquelle le polymère est choisi dans le groupe constitué de polymères et copolymères acryliques, d'un polymère carboxyvinylique, de polyamides, de polystyrène, d'acétate de polyvinyle, d'acétate-phtalate de polyvinyle, de polyvinylpyrrolidone et de leurs combinaisons.

16. Procédé selon la revendication 15, dans lequel un polymère est de l'acétate de polyvinyle.

17. Procédé selon la revendication 15, dans lequel ledit actif est choisi dans le groupe constitué d'édulcorants de haute intensité, d'aromatisants, de médicaments, de vitamines et de leurs combinaisons.

18. Procédé selon la revendication 15, comprenant en outre :
(d) l'évaporation dudit solvant à partir de ladite composition encapsulée.

19. Procédé selon la revendication 18, comprenant en outre :
(e) la mise en suspension de ladite composition encapsulée dans un courant d'air fluidisant ;
(f) la préparation d'une deuxième composition de revêtement comprenant un polymère et un solvant ; et
(g) la pulvérisation de ladite deuxième composition de revêtement sur ladite composition encapsulée.

20. Procédé selon la revendication 15, dans lequel ladite composition de revêtement comprend en outre un édulcorant supplémentaire autre que le sucralose.

21. Procédé selon la revendication 19, dans lequel ledit polymère de l'étape (f) est choisi dans le groupe constitué de polymères et copolymères acryliques, d'un polymère carboxyvinylique, de polyamides, de polystyrène, d'acétate de polyvinyle, d'acétate-phtalate de polyvinyle, de polyvinylpyrrolidone et de leurs combinaisons.

22. Procédé selon la revendication 20, dans lequel ledit édulcorant supplémentaire comprend un édulcorant de haute intensité.

23. Procédé selon la revendication 22, dans lequel ledit édulcorant de haute intensité est un élément choisi dans le groupe constitué de sels de saccharine, d'acésulfame potassium, d'aspartame, de thaumatine, de néotame, d'alitame et de leurs combinaisons.

24. Procédé selon la revendication 15, dans lequel ledit solvant est choisi dans le groupe constitué d'acétate d'éthyle, d'éther diéthylique, d'acétone, de benzène, de dichlorure d'éthylène, de méthanol, de méthyléthylcétone, d'éthanol, de toluène, de xylène, d'acétate d'amyle et de leurs combinaisons.

25. Procédé selon la revendication 16, dans lequel ladite composition de sucralose encapsulée comprend des particules ayant une plage de granulométrie moyenne d'environ 50 µm à environ 800 µm.
